# FASCICULE DE BREVET EUROPEEN

(11) **EP 2 727 206 B1**
(45) Date de publication et mention de la délivrance du brevet: **13.05.2015**
(21) Numéro de dépôt: 12730849.2
(22) Date de dépôt: 14.06.2012
(51) Int. Cl.: B60L 11/18, H02J 4/00, H02J 7/35, H02J 7/00, H02J 7/02

(54) **SYSTEME DE GESTION DE L'ENERGIE ELECTRIQUE COMPORTANT UNE SOURCE D'ALIMENTATION ELECTRIQUE, UNE SOURCE D'ENERGIE RENOUVELABLE ET UN CONVERTISSEUR DE PUISSANCE**
LEISTUNGSVERWALTUNGSSYSTEM MIT EINER ENERGIEQUELLE, EINER ERNEUERBAREN ENERGIEQUELLE UND EINEM STROMWANDLER
POWER MANAGEMENT SYSTEM COMPRISING A POWER SOURCE, A SOURCE OF RENEWABLE ENERGY, AND A POWER CONVERTER

(30) Priorité: 28.06.2011 FR 1155723
(43) Date de publication de la demande: 07.05.2014
(73) Titulaire: Schneider Toshiba Inverter Europe SAS, 27120 Pacy sur Eure (FR)
(72) Inventeur: BARAUNA, Allan, Pierre, F-27200 Vernon (FR)
(74) Mandataire: Bié, Nicolas
(86) Numéro de dépôt international: PCT/EP2012/061285
(87) Numéro de publication internationale: WO 2013/000721

(56) Documents cités:
- WO-A1-2010/030957
- WO-A1-2011/019855
- US-A- 5 315 227

## Description

### Domaine technique de l'invention

La présente invention se rapporte à un système de gestion de l'énergie électrique comportant une source d'alimentation électrique, telle que par exemple le réseau de distribution électrique, une source d'énergie renouvelable, telle que par exemple des panneaux photovoltaïques, un convertisseur de puissance et un système d'accumulation d'énergie électrique, tel que par exemple des batteries d'un véhicule électrique.

### Etat de la technique

Dans une résidence connectée à la fois à une source d'alimentation électrique dite classique, c'est-à-dire un réseau de distribution électrique, et à une source d'énergie renouvelable telle que des panneaux photovoltaïques, et dotée d'une borne de recharge d'un véhicule électrique, un premier convertisseur est nécessaire pour convertir l'énergie électrique fournie par les panneaux photovoltaïques afin de l'injecter sur le réseau de distribution électrique et un second convertisseur est nécessaire pour convertir l'énergie électrique provenant du réseau de distribution électrique afin de recharger les batteries d'un véhicule électrique branché sur une prise électrique adaptée. L'emploi de deux convertisseurs distincts pour remplir les deux fonctions s'avère être une solution particulièrement encombrante. De plus, les deux convertisseurs doivent être configurés spécifiquement pour la réalisation de leur fonction.

Le but de l'invention est donc de proposer un système de commande permettant de gérer la distribution électrique entre une source d'alimentation électrique classique, telle que par exemple un réseau de distribution électrique, une source d'énergie renouvelable, telle que par exemple des panneaux photovoltaïques, et un système d'accumulation d'énergie tel que par exemple les batteries d'un véhicule électrique, ledit système de commande étant simple, fiable, peu encombrant et réalisable à partir de composants standards.

De plus, le document WO 2011/019855 A1 est identifié. Il porte sur un système de charge tirant de l'énergie de manière détachable d'une source d'alimentation, comprenant : une configuration de délivrance d'électricité, une configuration d'entrée d'électricité, et une configuration de stockage d'énergie, des procédés d'approvisionnement du stockage d'énergie, le système de charge, et les dispositifs de chargeur pour véhicule électrique.

### Exposé de l'invention

Ce but est atteint par un système de gestion de l'énergie électrique comportant :
- une source d'alimentation électrique,
- une source d'énergie renouvelable,
- un convertisseur de puissance comportant une entrée, un module redresseur connecté à ladite entrée, un bus continu d'alimentation connecté au module redresseur, un module onduleur connecté au bus continu d'alimentation et une sortie connectée au module onduleur, caractérisé en ce que :
- la source d'alimentation électrique et la source d'énergie renouvelable sont connectées en parallèle à l'entrée du convertisseur de puissance,
- le système comporte des premiers moyens de sélection agencés pour connecter l'entrée du convertisseur de puissance, soit à la source d'alimentation électrique, soit à la source d'énergie renouvelable,
- le système comporte des seconds moyens de sélection agencés pour connecter la sortie du convertisseur de puissance soit à la source d'alimentation électrique, soit à un système d'accumulation d'énergie électrique,
- le système comporte des moyens de synchronisation des premiers moyens de sélection et des seconds moyens de sélection fonctionnant selon des règles de fonctionnement préétablies.

Selon une particularité, les premiers moyens de sélection comportent un premier contacteur et les seconds moyens de sélection comportent un second contacteur.

Avantageusement, le système comporte un filtre de sortie connecté à la sortie du convertisseur et au second contacteur.

Avantageusement, le système comporte un transformateur connecté au premier contacteur et un filtre d'entrée connecté au transformateur et à la source d'alimentation électrique.

Avantageusement, le système comporte un convertisseur de type "boost" connecté entre le module redresseur et le bus continu d'alimentation.

Selon l'invention, la source d'alimentation électrique est le réseau de distribution électrique.

Selon l'invention, la source d'énergie renouvelable est constituée de panneaux photovoltaïques ou d'au moins une éolienne.

Selon l'invention, le système d'accumulation d'énergie est constitué par les batteries d'un véhicule électrique.

### Brève description des figures

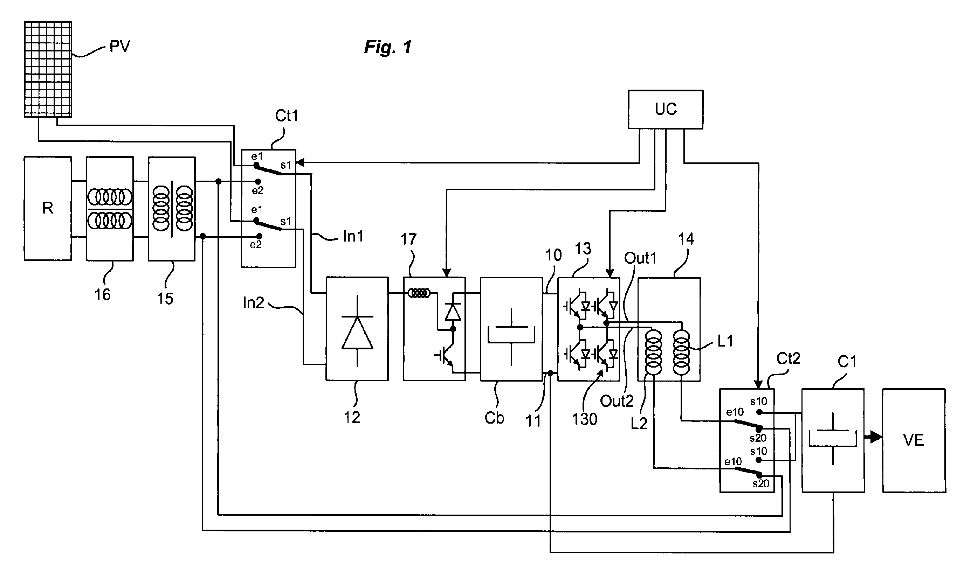

D'autres caractéristiques et avantages vont apparaître dans la description détaillée qui suit en se référant à un mode de réalisation donné à titre d'exemple et représenté par les dessins annexés sur lesquels la figure 1 représente le système de gestion de l'énergie selon l'invention.

### Description détaillée d'au moins un mode de réalisation

Le système de gestion de l'énergie électrique de l'invention comporte une source d'alimentation électrique classique, par exemple le réseau de distribution électrique R, une source d'énergie renouvelable, par exemple des panneaux photovoltaïques PV ou une éolienne, et permet de proposer différentes configurations de fonctionnement dans une résidence dotée d'une prise électrique destinée à être connectée à un système d'accumulation d'énergie électrique tel que par exemple les batteries d'un véhicule électrique VE.

Dans la suite de la description, on considérera que la source d'alimentation électrique est le réseau de distribution électrique R, que la source d'énergie renouvelable est constituée de panneaux photovoltaïques PV et que le système d'accumulation d'énergie électrique est formé par les batteries d'un véhicule électrique VE. A partir de ces différents constituants, les différentes configurations de fonctionnement sont les suivantes :
- le réseau de distribution électrique R peut être connecté aux batteries du véhicule électrique VE pour les recharger,
- les panneaux photovoltaïques PV peuvent être connectés au réseau de distribution électrique R pour réinjecter l'énergie électrique produite sur le réseau,
- les panneaux photovoltaïques PV peuvent être connectés aux batteries du véhicule électrique VE pour les recharger.

Ces trois configurations de fonctionnement peuvent être obtenues par le système de gestion de l'énergie électrique de l'invention. Le système de gestion de l'énergie électrique de l'invention comporte pour cela un convertisseur de puissance commun utilisé à la fois pour gérer la charge des batteries du véhicule électrique en provenance du réseau ou des panneaux photovoltaïques ou pour réinjecter l'énergie fournie par les panneaux photovoltaïques. Le convertisseur de puissance est ainsi employé :
- en mode chargeur, lorsque les panneaux photovoltaïques ou le réseau de distribution électrique sont employés pour charger les batteries du véhicule électrique ou,
- en mode régénération d'énergie, lorsque les panneaux photovoltaïques PV réinjectent l'énergie électrique produite vers le réseau de distribution électrique R.

Par défaut, le système est par exemple dans un mode chargeur dans lequel le réseau de distribution électrique est connecté à la prise de recharge du véhicule électrique, en vue de recharger ses batteries lorsque celui-ci est branché.

En référence à la figure 1, un convertisseur de puissance comporte :
- Une entrée comportant au moins deux lignes d'entrée ln1, ln2.
- Un module redresseur 12 connecté à l'entrée et destiné à redresser une tension alternative. Ce module redresseur 12 utilise avantageusement des diodes qui sont plus économiques et plus fiables que des thyristors. Cette tension redressée peut être filtrée pour obtenir une tension continue.
- Un bus continu d'alimentation connecté au module redresseur et composé d'une ligne positive 10 et d'une ligne négative 11, sur lesquelles peut être appliquée la tension continue.
- Un condensateur de bus Cb habituellement utilisé pour maintenir constante la tension Vdc du bus continu d'alimentation. Ce condensateur de bus Cb est connecté entre la ligne positive 10 et la ligne négative 11 du bus.
- Un module onduleur 13 connecté en sortie du bus continu d'alimentation. En mode chargeur, le module onduleur 13 remplit la fonction de convertisseur "buck" synchronisé et permet de commander la charge du système d'accumulation du véhicule électrique VE en mode source de courant. En mode régénération d'énergie, le module onduleur 13 est employé comme redresseur actif permettant de réinjecter l'énergie électrique produite par les panneaux photovoltaïques PV sur le réseau de distribution électrique R. Le module onduleur 13 comporte pour cela des interrupteurs électroniques de puissance 130 montés sur chaque phase auxquels est appliquée une commande par Modulation à Largeur d'Impulsions (MLI ou PWM). Ces interrupteurs sont des transistors de puissance, par exemple de type IGBT, commandés par une unité de commande réalisant la MLI. Sur la figure 1, le module onduleur 13 comporte deux bras de commutation, chaque bras de commutation étant doté de deux transistors de puissance 130 en série entre la ligne positive et la ligne négative du bus continu d'alimentation.
- Une sortie connectée au module onduleur et composée d'au moins deux lignes de sortie Out1, Out2 connectées chacune à un point milieu formé sur chaque bras de commutation du module onduleur 13.

Le système de l'invention comporte également des premiers moyens de sélection connectés à l'entrée du convertisseur de puissance et destinés à connecter l'entrée du convertisseur de puissance soit aux panneaux photovoltaïques PV, soit au réseau de distribution électrique R.

Le système comporte également des seconds moyens de sélection connectés à la sortie du convertisseur de puissance et destinés à connecter la sortie du convertisseur de puissance, soit au réseau de distribution électrique R, soit aux batteries du véhicule électrique VE.

Avantageusement, les premiers moyens de sélection comporte un premier contacteur Ct1 électromécanique commandé par un premier signal de commande et les seconds moyens de sélection comportent un second contacteur Ct2 électromécanique commandé par un second signal de commande, synchronisé avec le premier signal de commande selon des règles de fonctionnement préétablies, par exemple mémorisées dans une unité de commande UC et sélectionnées en vue d'obtenir les différentes configurations de fonctionnement précitées. Le premier contacteur Ct1 comporte deux premières entrées e1 connectées aux panneaux photovoltaïques PV et deux secondes entrées e2 connectées au réseau de distribution électrique R. Le premier contacteur Ct1 comporte deux sorties s1 connectées aux deux lignes d'entrée ln1, ln2 du convertisseur de puissance. Le second contacteur Ct2 comporte deux entrées e10 connectées aux deux lignes de sortie Out1, Out2 du convertisseur de puissance, deux premières sorties s10 destinées à être connectées aux batteries du véhicule électrique VE lorsque celui-ci est branché et deux secondes sorties s20 connectées au réseau de distribution électrique R.

Avantageusement, le système de gestion de l'énergie électrique comporte également un filtre de sortie 14 composé de deux inductances L1, L2 connectées chacune d'une part à une ligne de sortie Out1, Out2 du convertisseur de puissance et d'autre part à une entrée e10 distincte du second contacteur Ct2 et d'un condensateur C1 connecté d'une part aux premières sorties s10 du second contacteur Ct2 et d'autre part à la ligne négative 11 du bus continu d'alimentation. En mode chargeur, le filtre de sortie composé des deux inductances L1, L2 et du condensateur est employé, en compagnie du module onduleur, pour former le convertisseur de type "buck" synchronisé. En mode régénération d'énergie, les deux inductances L1, L2 du filtre de sortie 14 sont employées comme des inductances de type "boost".

Avantageusement, le système de gestion de l'énergie électrique comporte également un transformateur 15 dont le secondaire est connecté sur les deux secondes entrées e2 du premier contacteur Ct1 et un filtre CEM 16 (Compatibilité Electromagnétique) connecté d'une part au primaire dudit transformateur 15 et d'autre part au réseau de distribution électrique R. Le transformateur 15 est employé pour réaliser une isolation galvanique du convertisseur de puissance par rapport au réseau de distribution électrique R. Le filtre CEM 16 est employé et dimensionné pour remplir les normes en matière de compatibilité électromagnétique.

Avantageusement, le système de gestion de l'énergie électrique de l'invention comporte un convertisseur 17 de type "boost" composé d'un bras de commutation connecté aux deux lignes d'alimentation 10, 11 du bus continu d'alimentation et une inductance connectée d'une part au point milieu dudit bras de commutation et d'autre part en série sur une ligne d'alimentation du bus continu d'alimentation. Le bras de commutation du convertisseur "boost" pourra être l'un des bras de commutation d'un module onduleur à sortie triphasée employé dans un variateur de vitesse standard. Le convertisseur 17 de type "boost" a une double fonction. En mode régénération d'énergie, il permet d'augmenter la tension sur le bus continu d'alimentation. En mode chargeur, il forme une source de courant pour réduire les harmoniques du courant d'entrée.

Les règles de fonctionnement précitées sont par exemple les suivantes :
- Si le véhicule électrique VE est branché sur la prise destinée à la recharge de ses batteries et si l'énergie produite grâce aux panneaux photovoltaïques PV est suffisante, les batteries du véhicule électrique VE sont connectées aux panneaux photovoltaïques PV. Le premier contacteur Ct1 est commandé par l'unité de commande UC de telle sorte que ses deux premières entrées e1 soient alors connectées à ses deux sorties s2 et le second contacteur Ct2 est commandé par l'unité de commande UC de telle sorte que ses deux entrées e10 soient connectées à ses deux premières sorties s10.
- Si le véhicule électrique VE est branché sur la prise destinée à la recharge de ses batteries et si l'énergie électrique produite grâce aux panneaux photovoltaïques PV est insuffisante, les batteries du véhicule électrique VE sont connectées au réseau de distribution électrique R. Le premier contacteur Ct1 est alors commandé par l'unité de commande UC de telle sorte que ses deux secondes entrées e2 soient connectées à ses deux sorties s1 et le second contacteur Ct2 est commandé par l'unité de commande UC de telle sorte que ses deux entrées e10 soient connectées à ses deux premières sorties s10.
- Si le véhicule électrique VE n'est pas branché et s'il fait jour, le système est alors en mode régénération d'énergie dans lequel les panneaux photovoltaïques PV sont connectés au réseau de distribution électrique R. Pour cela, le premier contacteur Ct1 est commandé par l'unité de commande UC de telle sorte que ses deux premières entrées e1 soient connectées à ses deux sorties s1 et le second contacteur Ct2 est commandé par l'unité de commande UC de telle sorte que ses deux entrées e10 soient connectées à ses deux secondes sorties s20. Si le véhicule électrique VE n'est pas branché et s'il fait nuit, le système peut rester en mode régénération d'énergie.

La quantité d'énergie produite grâce aux panneaux photovoltaïques PV peut être déterminée en mesurant la tension délivrée par les panneaux, ou en employant une horloge à partir de laquelle sont définies des plages horaires de fonctionnement.

Selon l'invention, le système peut comporter un capteur permettant de détecter le branchement ou non du véhicule électrique sur sa prise de recharge.

Selon l'invention, en fonction de la règle de fonctionnement choisie, l'unité de commande UC envoie, grâce à des moyens de synchronisation, des signaux de commande aux premier et second contacteurs Ct1, Ct2 pour sélectionner la connexion de l'entrée du convertisseur de puissance et sa sortie et éventuellement au bras de commutation du convertisseur 17 si celui-ci est présent. De plus, en fonction de la règle de fonctionnement sélectionnée, l'unité de commande UC applique la commande adaptée aux interrupteurs électroniques de puissance du module onduleur 13 pour faire fonctionner le module onduleur 13 en convertisseur "buck" synchronisé ou en redresseur actif.

## Revendications

1. Système de gestion de l'énergie électrique comportant :
- une source d'alimentation électrique,
- une source d'énergie renouvelable,
- un convertisseur de puissance comportant une entrée, un module redresseur (12) connecté à ladite entrée, un bus continu d'alimentation connecté au module redresseur (12), un module onduleur (13) connecté au bus continu d'alimentation et une sortie connectée au module onduleur (13),
**caractérisé en ce que** :
- la source d'alimentation électrique et la source d'énergie renouvelable sont connectées en parallèle à l'entrée du convertisseur de puissance,
- le système comporte des premiers moyens de sélection agencés pour connecter l'entrée du convertisseur de puissance, soit à la source d'alimentation électrique, soit à la source d'énergie renouvelable,
- le système comporte des seconds moyens de sélection agencés pour connecter la sortie du convertisseur de puissance soit à la source d'alimentation électrique, soit à un système d'accumulation d'énergie électrique,
- le système comporte des moyens de synchronisation des premiers moyens de sélection et des seconds moyens de sélection fonctionnant selon des règles de fonctionnement préétablies.

2. Système selon la revendication 1, **caractérisé en ce que** les premiers moyens de sélection comportent un premier contacteur (Ct1) et **en ce que** les seconds moyens de sélection comportent un second contacteur (Ct2).

3. Système selon la revendication 2, **caractérisé en ce qu'**il comporte un filtre de sortie (14) connecté à la sortie du convertisseur et au second contacteur (Ct2).

4. Système selon la revendication 1, **caractérisé en ce qu'**il comporte un transformateur (15) connecté au premier contacteur (Ct1) et un filtre d'entrée (16) connecté au transformateur et à la source d'alimentation électrique.

5. Système selon la revendication 1, **caractérisé en ce qu'**il comporte un convertisseur (17) de type "boost" connecté entre le module redresseur (12) et le bus continu d'alimentation.

6. Système selon la revendication 1, **caractérisé en ce que** la source d'alimentation électrique est le réseau de distribution électrique (R).

7. Système selon la revendication 1, **caractérisé en ce que** la source d'énergie renouvelable est constituée de panneaux photovoltaïques (PV) ou d'au moins une éolienne.

8. Système selon la revendication 1, **caractérisé en ce que** le système d'accumulation d'énergie est constitué par les batteries d'un véhicule électrique (VE).

## Patentansprüche

1. Elektroenergie-Managementsystem, welches aufweist:
- eine Stromversorgungsquelle,
- eine erneuerbare Energiequelle,
- einen Leistungswandler, der einen Eingang, ein mit dem Eingang verbundenes Gleichrichtermodul (12), einen mit dem Gleichrichtermodul (12) verbundenen Gleichstromversorgungsbus, ein Wechselrichtermodul (13), das mit dem Gleichstromversorgungsbus verbunden ist, und einen Ausgang, der mit dem Wechselrichtermodul (13) verbunden ist, aufweist,
**dadurch gekennzeichnet, dass**:
- die Stromversorgungsquelle und die erneuerbare Energiequelle zum Eingang des Leistungswandlers parallelgeschaltet sind,
- das System erste Auswahlmittel aufweist, die dazu eingerichtet sind, den Eingang des Leistungswandlers entweder mit der Stromversorgungsquelle oder mit der erneuerbaren Energiequelle zu verbinden,
- das System zweite Auswahlmittel aufweist, die dazu eingerichtet sind, den Ausgang des Leistungswandlers entweder mit der Stromversorgungsquelle oder mit einem elektrischen Energiespeichersystem zu verbinden,
- das System Mittel zur Synchronisation der ersten Auswahlmittel und der zweiten Auswahlmittel aufweist, die nach zuvor festgelegten Funktionsregeln funktionieren.

2. System nach Anspruch 1, **dadurch gekennzeichnet, dass** die ersten Auswahlmittel ein erstes Schütz (Ct1) aufweisen, und dadurch, dass die zweiten Auswahlmittel ein zweites Schütz (Ct2) aufweisen.

3. System nach Anspruch 2, **dadurch gekennzeichnet, dass** es ein Ausgangsfilter (14) aufweist, das mit dem Ausgang des Wandlers und mit dem zweiten Schütz (Ct2) verbunden ist.

4. System nach Anspruch 1, **dadurch gekennzeichnet, dass** es einen Umspanner (15), der mit dem ersten Schütz (Ct1) verbunden ist, und ein Eingangsfilter (16), das mit dem Umspanner und mit der Stromversorgungsquelle verbunden ist, aufweist.

5. System nach Anspruch 1, **dadurch gekennzeichnet, dass** es einen Aufwärtswandler (17) aufweist, der zwischen das Gleichrichtermodul (12) und den Gleichstromversorgungsbus geschaltet ist.

6. System nach Anspruch 1, **dadurch gekennzeichnet, dass** die Stromversorgungsquelle das Stromversorgungsnetz (R) ist.

7. System nach Anspruch 1, **dadurch gekennzeichnet, dass** die erneuerbare Energiequelle aus Solarmodulen (PV) oder mindestens einer Windenergieanlage besteht.

8. System nach Anspruch 1, **dadurch gekennzeichnet, dass** das Energiespeichersystem aus den Batterien eines Elektrofahrzeugs (VE) besteht.

## Claims

1. An electrical energy management system comprising:
- an electrical supply source,
- a renewable energy source,
- a power converter comprising an input, a rectifier module (12) connected to said input, a DC supply bus connected to the rectifier module (12), an inverter module (13) connected to the DC supply bus and an output connected to the inverter module (13),
**characterized in that**:
- the electrical supply source and the renewable energy source are connected in parallel to the input of the power converter,
- the system comprises first selection means designed to connect the input of the power converter, either to the electrical supply source, or to the renewable energy source,
- the system comprises second selection means designed to connect the output of the power converter either to the electrical supply source, or to an electrical energy accumulation system,
- the system comprises means for synchronizing the first selection means and second selection means operating according to pre-established operating rules.

2. The system as claimed in claim 1, **characterized in that** the first selection means comprise a first contactor (Ct1) and **in that** the second selection means comprise a second contactor (Ct2).

3. The system as claimed in claim 2, **characterized in that** it comprises an output filter (14) connected to the output of the converter and to the second contactor (Ct2) .

4. The system as claimed in claim 1, **characterized in that** it comprises a transformer (15) connected to the first contactor (Ct1) and an input filter (16) connected to the transformer and to the electrical supply source.

5. The system as claimed in claim 1, **characterized in that** it comprises a converter (17) of "boost" type connected between the rectifier module (12) and the DC supply bus.

6. The system as claimed in claim 1, **characterized in that** the electrical supply source is the electrical distribution network (R).

7. The system as claimed in claim 1, **characterized in that** the renewable energy source consists of photovoltaic panels (PV) or of at least one wind turbine.

8. The system as claimed in claim 1, **characterized in that** the energy accumulation system consists of the batteries of an electric vehicle (VE).
